# EUROPÄISCHE PATENTSCHRIFT

(11) **EP 0 482 298 B1**
(45) Veröffentlichungstag und Bekanntmachung des Hinweises auf die Patenterteilung: **09.11.1994**
(21) Anmeldenummer: 91111910.5
(22) Anmeldetag: 17.07.1991
(51) Int. Cl.: B66C 23/80, B60G 17/015

(54) **Verfahren und Vorrichtung zum Durchführen eines Nivelliervorganges bei einem Körper, insbesondere einem Fahrzeugteil**
Procedure and device for the execution of a levelling operation for a body, in particular a vehicle element
Procédure et dispositif pour effectuer une opération de nivellement d'un corps, en particulier une pièce de véhicule

(30) Priorität: 24.10.1990 DE 4033761
(43) Veröffentlichungstag der Anmeldung: 29.04.1992
(73) Patentinhaber: HYDAC TECHNOLOGY GMBH, 66273 Sulzbach (DE)
(72) Erfinder: Baldauf, Karl-Eberhard, Dipl.-Ing., W-6600 Saarbrücken (DE)
(74) Vertreter: Patentanwälte Bartels und Partner

(56) Entgegenhaltungen:
- DE-A- 2 238 168
- DE-A- 2 660 266
- DE-A- 2 753 259
- DE-A- 3 619 777
- FR-A- 2 259 778
- GB-A- 1 202 471

## Beschreibung

Die Erfindung betrifft ein Verfahren zum Durchführen eines Nivelliervorganges bei einem Körper, insbesondere einem Fahrzeugteil, der über zumindest drei hydraulische Abstützzylinder, die in räumlichen Abständen voneinander am zu nivellierenden Körper angeordnet sind, auf einer Grundfläche abgestützt wird, wobei mittels einer Nivelliereinrichtung Lagesignale in Abhängigkeit von Lageabweichungen des Körpers relativ zur Nivellierposition erzeugt werden, die Lagesignale mittels einer Steuerlogik zu Ventil-Steuersignalen verarbeitet und diese zur Ansteuerung von Steuerventilen zur selektiven Versorgung der Abstützzylinder mit zugemessenen Mengen Druckflüssigkeit verwendet werden. Außerdem betrifft die Erfindung eine Vorrichtung zum Durchführen eines solchen Verfahrens.

Eine selbsttätige Durchführung von Nivelliervorgängen bei über drei oder mehr Abstützzylinder abgestützten Körpern, beispielsweise Fahrwerksteilen oder Aufbauten von Fahrzeugen, Plattformen als Bettungen für Kräne, Geräte oder dergleichen, erfordert bislang den Einsatz aufwendiger technischer Mittel. Ein Nivellierverfahren der eingangs genannten Art läßt sich beispielsweise unter Ausnutzung der wesentlichen Komponenten bekannter Niveauregeleinrichtungen für Kraftfahrzeuge durchführen, die erforderlichenfalls mit Zusatzeinrichtungen zur Nivellierung versehen werden. Die DE 36 19 777 C2 zeigt Beispiele derartiger Niveauregeleinrichtungen.

In solchen Fällen jedoch, wo derartige komplexe Hydraulikeinrichtungen nicht vorhanden sind oder nicht ohne weiteres sinnvoll zum Einsatz gebracht werden können, beispielsweise bei einfach ausgerüsteten Plattformen, bei denen die Abstützung auf der Grundfläche über die Abstützzylinder unmittelbar erfolgt, ist man bislang gezwungen, die Nivelliervorgänge durch Handbetrieb oder Handsteuerung der Abstützzylinder durchzuführen.

Der Erfindung liegt die Aufgabe zugrunde, ein Verfahren der in Betracht stehenden Art aufzuzeigen, das mit vergleichsweise geringem Aufwand durchführbar ist, so daß es auch für eine Anwendung bei Einsatzgebieten geeignet ist, bei denen bislang Nivelliervorgänge von Hand durchgeführt wurden.

Bei einem Verfahren der eingangs genannten Art ist diese Aufgabe erfindungsgemäß durch die im kennzeichnenden Teil von Anspruch 1 angegebenen Merkmale a) bis d) gelöst.

Danach wird beim erfindungsgemäßen Verfahren so vorgegangen, daß man gemäß Merkmal a) zunächst sämtliche Abstützzylinder ausfahren läßt, indem den Abstützzylindern zugemessene Mengen Druckflüssigkeit zugeführt werden. Die dosierte Zufuhr der Druckflüssigkeit zu den Abstützzylindern kann in der Weise erfolgen, daß über eine Gleichhubschaltung üblicher Art das Steuerventil jedes Zylinders taktmäßig betätigt wird. Es kann dabei entweder so vorgegangen werden, daß die Steuerventile sämtlicher Abstützzylinder gleichzeitig getaktet werden oder daß die Ansteuerung sequentiell durchführt wird, daß also die Abstützzylinder reihum nacheinander getaktet werden. Im letzteren Fall kann unter Umständen ein Hydrauliksystem mit geringerer Pumpen-Förderleistung verwendet werden.

Da das zu nivellierende Fahrzeugteil oder die betreffende Plattform zu Beginn des Nivelliervorgangs beliebig zum Untergrund ausgerichtet ist, kommen die Abstützzylinder beim Ausfahren nicht gleichzeitig in eine Abstützposition, in der zwischen der Grundfläche des Untergrundes und dem Abstützzylinder eine Abstützkraft aufgebaut wird. Dieser Zustand wird vielmehr zuerst nur bei einem der Abstützzylinder erreicht.

Gemäß den Merkmalen b) und c) wird nun für jeden der Abstützzylinder das Erreichen der Abstützposition aufgrund des entsprechenden Druckanstieges der Druckflüssigkeit ermittelt, wie er aufgrund der dosierten Versorgung mit Druckflüssigkeit bei Erreichen der Abstützposition zutage tritt. Sobald dieser Zustand bei einem Zylinder erreicht ist, wird ein Drucksignal erzeugt, aufgrund dessen die weitere Versorgung des betreffenden Zylinders mit Druckflüssigkeit unterbunden wird.

Nachdem die Versorgung mit Druckflüssigkeit auf diese Weise nacheinander bei allen Abstützzylindern bis hin zum letzten der vorhandenen Abstützzylinder unterbunden worden ist, wenn also beispielsweise bei Vorhandensein von vier Abstützzylindern auch der vierte Zylinder abgeschaltet worden ist, dient die Abstützposition dieses vierten Zylinders als Nivellier-Bezugspunkt, von dem ausgehend der weitere Nivelliervorgang gemäß dem Merkmal d) in der Weise zum Abschluß gebracht wird, daß die restlichen, anderen Abstützzylinder, die zuvor bereits abgeschaltet worden waren, nunmehr nach Maßgabe der Lagesignale einer üblichen Nivelliereinrichtung weiter betätigt werden, bis die Nivellierposition erreicht ist. Bei der Nivelliereinrichtung kann es sich um eine elektronische Libelle bekannter Bauart handeln.

Das Verfahren kann so durchgeführt werden, daß derjenige Abstützzylinder, bei dem die Versorgung mit Druckflüssigkeit als letztem unterbunden worden ist, also der Abstützzylinder, der für den Abschluß des Nivelliervorganges den Bezugspunkt definiert, in einem oder mehreren Takten der Gleichhubschaltung noch weiter ausgefahren wird, bevor die Nivellierung durch lageabhängige Betätigung der übrigen Abstützzylinder zum Abschluß gebracht wird. Dadurch wird sichergestellt, daß das zu nivellierende Fahrzeugteil oder die Plattform nach Abschluß des Nivelliervorganges in allen Bereichen ihrer räumlichen Ausdehnung von der abstützenden Grundfläche sicher freikommt.

Ferner kann vorgesehen sein, daß bei vollem Ausfahren eines Abstützzylinders ein das Ende seines Hubweges angebendes Endlagesignal erzeugt wird, aufgrund dessen der weitere Nivelliervorgang unterbrochen wird. Vorzugsweise ist die Anordnung hierbei so getroffen, daß bei Auftreten eines Endlagesignals angezeigt wird, welcher der Abstützzylinder voll ausgefahren worden ist. Diesen betroffenen Abstützzylinder läßt man nun, was vorzugsweise selbsttätig erfolgt, wieder einfahren, um dem Bedienungspersonal, dem durch Licht- oder Tonsignal angezeigt worden ist, um welchen Zylinder es sich handelt, die Möglichkeit zu geben, zwischen dem betreffenden Zylinder und dem Abstützpunkt an der Grundfläche ein Zwischenstück (Klotz oder verstärkte Unterlage) einzufügen. Der Nivelliervorgang kann sodann vollends zum Abschluß gebracht oder neu begonnen werden.

Das erfindungsgemäße Verfahren ist gleichermaßen anwendbar, wenn es sich um einen über die Abstützzylinder unmittelbar auf der Grundfläche abgestützten Körper, beispielsweise eine Plattform, handelt oder wenn es sich um ein Fahrzeugteil handelt, das gegenüber der Grundfläche über eine hydraulische Niveauregeleinrichtung abgestützt oder gegenüber dem Untergrund in klassischer Form mechanisch abgefedert ist. In den beiden letztgenannten Fällen geschieht die Nivellierung über in die Niveauregeleinrichtung integrierte Abstützzylinder bzw. in Zusammenwirkung zwischen Abstützzylindern und Komponenten des mechanischen Federungssystems.

Eine Vorrichtung zum Durchführen des Nivellierverfahrens, bei der am zu nivellierenden Körper zumindest drei hydraulische Abstützzylinder in räumlichen Abständen voneinander angeordnet sind, über die der Körper auf einer Grundfläche abstützbar ist, und bei der die Abstützzylinder über Steuerventile selektiv mit zugemessenen Mengen Druckflüssigkeit über Steuerventile versorgbar sind, die durch von einer Steuerlogik zur Verfügung gestellte Ventil-Steuersignale betätigbar sind, ist erfindungsgemäß dadurch gekennzeichnet, daß jeder Abstützzylinder einen Drucksensor zum Ermitteln der Größe des Druckes der im Abstützzylinder befindlichen Druckflüssigkeit und zum Erzeugen eines die Größe dieses Druckes darstellenden Druckwertsignals aufweist, das der Steuerlogik zur Signalverarbeitung zuführbar ist. Aufgrund der von den Drucksensoren gelieferten Druckwertsignale ist mittels der Steuerlogik das Erreichen der Abstützposition durch die einzelnen Abstützzylinder feststellbar, so daß die zu Beginn eines Nivelliervorgangs anfänglich stattfindende Versorgung der Abstützzylinder mit Druckflüssigkeit bei den einzelnen Zylindern nacheinander bis zum letzten Abstützzylinder unterbunden wird, dessen Abstützposition sodann den Bezugspunkt für den Abschluß des Nivelliervorganges definiert.

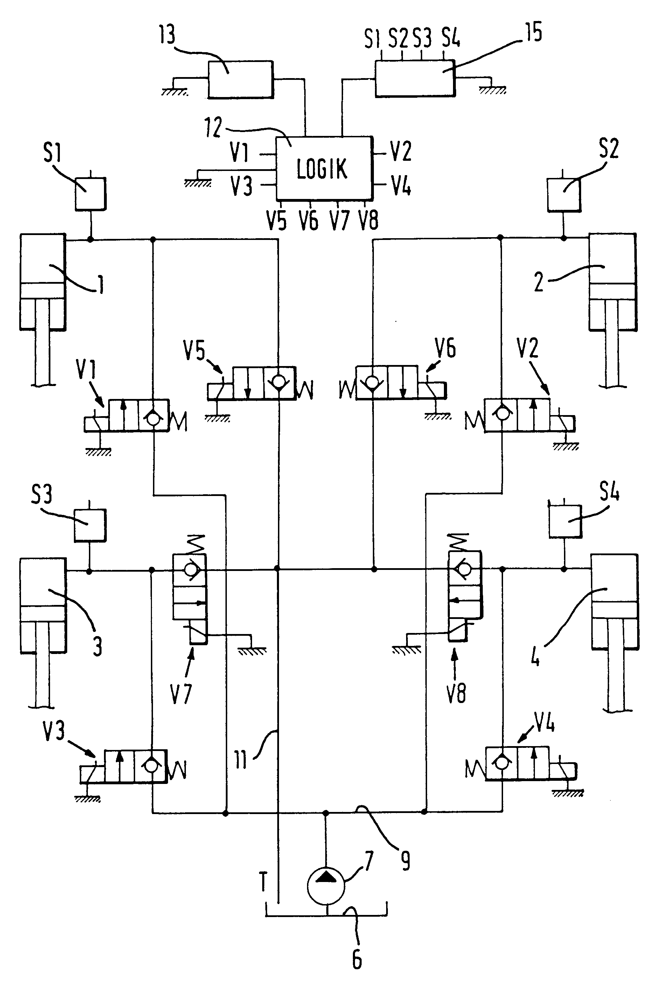

Nachstehend ist die Erfindung anhand der Zeichnung im einzelnen erläutert.

Die einzige Figur zeigt einen schematisch vereinfachten und im wesentlichen auf den Hydraulikteil beschränkten Schaltplan eines Ausführungsbeispiels der Vorrichtung zum Durchführen des erfindungsgemäßen Verfahrens.

Ein in der Figur nicht dargestellter Körper, der in eine Nivellierposition gebracht werden soll, weist beim vorliegenden Beispiel vier hydraulische Abstützzylinder 1, 2, 3 und 4 auf, die in räumlichen Abständen voneinander, genau gesagt, jeder in einem Eckbereich des im Grundriß im wesentlichen rechteckförmigen Körpers, angeordnet sind. Bei dem zu nivellierenden Körper kann es sich um eine Plattform, die beispielsweise als Kran- oder Geräteträger dient, oder um ein Fahrzeugteil, beispielsweise den Aufbau oder den Rahmen eines Schwerlastfahrzeuges, handeln. Bei einer Plattform dienen die Abstützzylinder 1 bis 4 zur unmittelbaren Abstützung in Zusammenwirkung mit der Grundfläche des Untergrundes. Bei einem Fahrzeugteil können die Abstützzylinder 1 bis 4 Komponenten des Federungssystems sein, beispielsweise mit Teilen einer mechanischen Federungsanlage zusammenwirken oder auch Bestandteil einer hydraulischen Niveauregeleinrichtung sein, die beispielsweise in der aus der DE 36 19 777 C2 bekannten Art ausgebildet ist.

Zur Versorgung der Abstützzylinder 1 bis 4 mit Drucköl aus einem Tank 6 ist eine Hydraulikpumpe 7 vorgesehen, deren Druckseite mit einer Druckleitung 9 verbunden ist. Von der Druckleitung 9 ist zum Arbeitsraum jedes der Abstützzylinder 1 bis 4 Drucköl über je ein jedem Abstützzylinder zugeordnetes Steuerventil zuführbar, die in der Figur mit V₁, V₂, V₃ und V₄ bezeichnet sind. Bei den Ventilen V₁ bis V₄ handelt es sich um je gleiche Wege-Sitzventile, die mit einem elektromagnetischen Antrieb ausgerüstet sind.

Der Arbeitsraum jedes der Abstützzylinder 1 bis 4 ist außerdem über je ein weiteres Steuerventil, das beim Abstützzylinder 1 mit V₅, beim Abstützzylinder 2 mit V₆, beim Abstützzylinder 3 mit V₇ und beim Abstützzylinder 4 mit V₈ bezeichnet ist, mit einer zum Tank 6 führenden Rücklaufleitung 11 verbunden. Die Ventile V₅ bis V₈ sind, wie die Ventile V₁ bis V₄, Wege-Sitzventile mit elektromagnetischem Antrieb.

Jedem der Abstützzylinder 1 bis 4 ist je ein Drucksensor S₁, S₂, S₃ bzw. S₄ zugeordnet, die zur Ermittlung des im Arbeitsraum dieser Zylinder herrschenden Drucks mit dem Leitungsabschnitt zwischen dem betreffenden Abstützzylinder und den ihm zugeordneten Steuerventilen angeordnet sind.

Zur Steuerung der Ventile V₁ bis V₈ sind deren Antriebe über nicht dargestellte Steuerleitungen mit zugehörigen Ausgängen einer Steuerlogik 12 verbunden. Letztere erhält von einer Nivelliereinrichtung 13 Lagesignale, welche die Lageabweichung des zu nivellierenden Körpers gegenüber der gewünschten Nivellierposition darstellen. Die Nivelliereinrichtung 13, die beispielsweise in Form einer elektronischen Libelle gebräuchlicher Art ausgebildet ist, erzeugt die Lagesignale in üblicher Weise mit Hilfe von Neigungssensoren, die mit dem zu nivellierenden Körper verbunden sind.

Die Steuerlogik 12 ist außerdem mit dem Ausgang einer Komparatorschaltung 15 verbunden. Diese erhält über nicht dargestellte Streueleitungen die von den Drucksensoren S₁ bis S₄ erzeugten Druckwertsignale, deren Signalwert jeweils der Größe des im Arbeitsraum des zugehörigen Abstützzylinders 1 bis 4 herrschenden Druck entspricht. Die Komparatorschaltung 15 vergleicht den signalwert der Druckwertsignale mit einem vorbestimmten Schwellenwert und gibt an die Steuerlogik 12 dann ein Drucksignal ab, wenn das von den Drucksensoren S₁ bis S₄ gelieferte Signal den Schwellenwert übersteigt, wenn also der in einem betreffenden Abstützzylinder 1 bis 4 herrschende Innendruck einen bestimmten Druckwert übersteigt.

Der Schwellenwert ist so gewählt, daß er einem Druckanstieg im Arbeitsraum der Abstützzylinder 1 bis 4 entspricht, wie er sich dann ergibt, wenn der betreffende Abstützzylinder beim Ausfahren eine Abstützposition erreicht, bei der zwischen der Grundfläche des Untergrundes und dem Abstützzylinder eine entsprechende Abstützkraft aufgebaut wird. Bei einer auf dem Untergrund in beliebiger Lage aufliegenden Plattform ist dies der Fall, wenn es bei einem der ausfahrenden Abstützzylinder 1 bis 4 zur Berührung mit der Grundfläche des Untergrundes kommt. Bei einem über ein gefedertes Fahrwerk abgestützten Fahrzeugteil ist dies der Fall, wenn der betreffende Abstützzylinder beim Ausfahren eine entsprechende Achs- oder Radlast aufbaut.

Zu Beginn eines Nivelliervorganges werden die mit der Druckleitung 9 verbundenen Steuerventile V₁ bis V₄ mittels der Steuerlogik 12 zunächst in einer Gleichhub-Taktschaltung so getastet, daß die Abstützzylinder 1 bis 4 in Hubschritten ausfahren. Da die Plattform oder der zu nivellierende Fahrzeugteil zur Grundfläche zunächst eine beliebige Stellung einnimmt, wird zunächst nur einer der Abstützzylinder 1 bis 4 in die Abstützposition gelangen. Wenn dies der Fall ist und sich der entsprechende Druckanstieg in dem betreffenden Zylinder einstellt, wird mittels des zugeordneten Drucksensors S₁ bis S₄ und der Komparatorschaltung 15 ein diesbezügliches Drucksignal erzeugt und der Steuerlogik 12 zugeführt, die nunmehr bewirkt, daß das Steuerventil V₁, V₂, V₃ oder V₄ des betreffenden Abstützzylinders nicht länger getaktet, also mit Drucköl versorgt wird. Die übrigen Abstützzylinder werden weiterhin getaktet, bis der nächste Zylinder in die Abstützposition gelangt und dementsprechend ebenfalls abgeschaltet wird. Nachdem der letzte der Abstützzylinder 1 bis 4 abgeschaltet ist, wird der Nivelliervorgang nunmehr in der Weise zum Abschluß gebracht, daß lediglich die übrigen Abstützzylinder, also die bereits zuvor abgeschalteten Abstützzylinder,solange weiter taktmäßig mit Hydrauliköl versorgt werden, und zwar nach Maßgabe der von der Nivelliereinrichtung 13 zur Steuerlogik 12 zugeführten Lagesignale, bis keine Lageabweichung gegenüber der Nivellierposition mehr gegeben ist.

Angenommen, daß der Abstützzylinder 2 der letzte Zylinder ist, dessen Versorgung beim anfänglichen Ausfahren unterbunden worden ist, dann werden für den Abschluß des Nivelliervorgangs, gesteuert nach Maßgabe der Lagesignale der Nivelliereinrichtung 13, lediglich noch die Abstützzylinder 1, 3 und 4 getaktet. Der Abstützzylinder 2 bleibt abgeschaltet, bildet also den Bezugspunkt für den Abschluß des Nivelliervorgangs. In manchen Fällen ist es vorteilhaft, den zuletzt abgeschalteten Abstützzylinder, also im angenommenen Fall den Abstützzylinder 2, vor dem Abschluß des Nivelliervorgangs noch eine zusätzliche Strecke ausfahren zu lassen, um sicherzustellen, daß ein ausreichender Abstand des Körpers gegenüber der Grundfläche nach Abschluß des Nivelliervorgangs gegeben ist.

Das beschriebene Verfahren setzt voraus, daß alle vorhandenen Abstützzylinder frei beweglich sind, d.h. die Kolben genügend Abstand von den jeweiligen Endlagen haben. Um dem Rechnung zu tragen, ist beim Ausführungsbeispiel, was in der Zeichnung nicht dargestellt ist, jedem Abstützzylinder 1 bis 4 ein Endlageschalter zugeordnet, der ein Endlagesignal abgibt, wenn der Zylinder voll ausgefahren ist. Das Endlagesignal wird der Steuerlogik 12 zugeführt, die bei Auftreten eines Endlagesignals den weiteren Nivelliervorgang abbricht. Außerdem wird in diesem Fall ein Anzeigesignal erzeugt, das der Bedienungsperson zur Kenntnis bringt, welcher Abstützzylinder voll ausgefahren ist. Ferner bewirkt die Steuerlogik 12, daß der betreffende, voll ausgefahrene Abstützzylinder 1 bis 4 durch Abfuhr von Hydrauliköl einfährt. Das Einfahren der Abstützzylinder 1 bis 4 erfolgt durch Steuerung der mit der Rücklaufleitung 11 verbundenen Steuerventile V₅, V₆, V₇ und V₈. Die Bedienungsperson kann nun vor dem erneuten Einleiten des Nivelliervorgangs geeignete Abhilfemaßnahmen ergreifen, beispielsweise im Bereich des angezeigten Abstützzylinders auf der Grundfläche geeignete Unterlagen in Stellung bringen.

Die vorstehende Beschreibung und die Zeichnung beschränken sich nur auf die Angabe von Merkmalen, die für die beispielsweise Verkörperung der Erfindung wesentlich sind. Soweit die Merkmale in der Beschreibung und in der Zeichnung offenbart und in den Ansprüchen nicht genannt sind, dienen sie erforderlichenfalls auch zur Bestimmung des Gegenstandes der Erfindung.

## Patentansprüche

1. Verfahren zum Durchführen eines Nivelliervorganges bei einem Körper, insbesondere einem Fahrzeugteil, der über zumindest drei hydraulische Abstützzylinder (1, 2, 3, 4), die in räumlichen Abständen voneinander am zu nivellierenden Körper angeordnet sind, auf einer Grundfläche abgestützt wird, wobei mittels einer Nivelliereinrichtung Lagesignale in Abhängigkeit von Lageabweichungen des Körpers relativ zur Nivellierposition erzeugt werden, die Lagesignale mittels einer Steuerlogik (12) zu Ventil-Steuersignalen verarbeitet und diese zur Ansteuerung von Steuerventilen (V₁, V₂, V₃, V₄ V₅, V₆, V₇, V₈) zur selektiven Versorgung der Abstützzylinder mit zugemessenen Mengen Druckflüssigkeit verwendet werden, dadurch gekennzeichnet,
a) daß zu Beginn eines Nivelliervorganges die Ventil-Steuersignale mittels der Steuerlogik (12) unabhängig von Lagesignalen der Nivelliereinrichtung erzeugt und für gleichzeitige oder sequentielle Versorgung sämtlicher Abstützzylinder mit den zugemessenen Mengen der Druckflüssigkeit den Steuerventilen sämtlicher Abstützzylinder zugeführt werden,
b) daß in sämtlichen Abstützzylindern der in ihnen herrschende Druck ermittelt wird,
c) daß bei Ermittlung eines einen vorbestimmten Schwellenwert übersteigenden Druckanstieges in einem Abstützzylinder für diesen ein Drucksignal erzeugt wird, aufgrund dessen die weitere Versorgung des betreffenden Abstützzylinders mit Druckflüssigkeit von der Steuerlogik (12) unterbunden wird, und
d) daß nach Unterbinden der Versorgung desjenigen Abstützzylinders mit Druckflüssigkeit, für den als letztem das Drucksignal erzeugt worden ist, der Nivelliervorgang in der Weise zum Abschluß gebracht wird, daß nur die übrigen Abstützzylinder nach Maßgabe der Lagesignale der Nivelliereinrichtung mit der Druckflüssigkeit versorgt werden.

2. Verfahren nach Anspruch 1, dadurch gekennzeichnet, daß die Ermittlung des in ihnen herrschenden Druckes bei sämtlichen Abstützzylindern (1, 2, 3, 4) gleichzeitig und/oder kontinuierlich oder in Abhängigkeit von der vorzugsweise taktmäßig erfolgenden Versorgung der Abstützzylinder mit den zugemessenen Mengen Druckflüssigkeit sequentiell durchgeführt wird.

3. Verfahren nach Anspruch 1 oder 2, dadurch gekennzeichnet, daß nach dem Unterbinden der Versorgung desjenigen Abstützzylinders mit Druckflüssigkeit, für den als letztem das Drucksignal erzeugt worden ist, zu diesem Abstützzylinder (1, 2, 3, 4) eine zusätzliche, zugemessene Menge Druckflüssigkeit zugeführt wird, bevor der Nivelliervorgang durch Versorgen der übrigen Abstützzylinder mit Druckflüssigkeit nach Maßgabe der Lagesignale zum Abschluß gebracht wird.

4. Verfahren nach einem der Ansprüche 1 bis 3, dadurch gekennzeichnet, daß bei vollem Ausfahren eines Abstützzylinders (1, 2, 3, 4) ein das Ende seines Hubweges angebendes Endlagesignal für den betreffenden Abstützzylinder erzeugt wird und daß der Nivelliervorgang durch die Steuerlogik (12) aufgrund des Erzeugens eines Endlagesignals unterbrochen wird.

5. Verfahren nach Anspruch 4, dadurch gekennzeichnet, daß aufgrund des Endlagesignals ein den voll ausgefahrenen Abstützzylinder (1, 2, 3, 4) bezeichnendes Anzeigesignal erzeugt wird und daß mittels der Steuerlogik (12) aufgrund des Endlagesignals oder des Anzeigesignals ein die Abfuhr von Druckflüssigkeit aus dem betreffenden Abstützzylinder zum Einfahren desselben bewirkendes Ventil-Steuersignal erzeugt wird.

6. Vorrichtung zum Durchführen des Verfahrens nach einem der Ansprüche 1 bis 5, bei der am zu nivellierenden Körper zumindest drei hydraulische Abstützzylinder (1, 2, 3, 4) in räumlichen Abständen voneinander angeordnet sind, über die der Körper auf einer Grundfläche abstützbar ist, und bei der die Abstützzylinder selektiv mit zugemessenen Mengen Druckflüssigkeit über Steuerventile (V₁-V₈) versorgbar sind, die durch von einer Steuerlogik (12) zur Verfügung gestellte Ventil-Steuersignale betätigbar sind, dadurch gekennzeichnet, daß jedem Abstützzylinder (1 bis 4) ein Drucksensor (S₁, S₂, S₃, S₄) zum Ermitteln der Größe des Druckes der im Abstützzylinder befindlichen Druckflüssigkeit und zum Erzeugen eines die Größe dieses Druckes darstellenden Druckwertsignals zugeordnet ist, das der Steuerlogik (12) zur Signalverarbeitung zuführbar ist.

7. Vorrichtung nach Anspruch 6, dadurch gekennzeichnet, daß die Steuerlogik (12) eine die Druckwertsignale der Drucksensoren (S₁ bis S₄) verarbeitende Komparatorschaltung (15) aufweist, die bei einen Schwellenwert übersteigender Größe eines Druckwertsignals ein den entsprechenden Druckanstieg in dem betreffenden Abstützzylinder (1 bis 4) bezeichnendes Drucksignal erzeugt.

## Claims

1. Method for carrying out a leveling operation in the case of a body, in particular a vehicle part, which is supported on a surface by way of at least three hydraulic support cylinders (1, 2, 3, 4), which are arranged at spatial distances apart on the body to be leveled, positional signals being produced by means of a leveling device depending on deviations of position of the body relative to the leveling position, the positional signals being processed by means of a control logic arrangement (12) to provide valve control signals and the latter being used for controlling control valves (V1, V2, V3, V4, V5, V6, V7, V8) for the selective supply of the support cylinders with measured quantities of pressure fluid, characterised in that
a) at the beginning of a leveling operation, the valve control signals are produced by means of the control logic arrangement (12) irrespective of positional signals from the leveling device and for the simultaneous or sequential supply of all the support cylinders with the measured quantities of pressure fluid are supplied to the control valves of all support cylinders,
b) in all the support cylinders, the pressure prevailing therein is ascertained,
c) on ascertaining a pressure rise exceeding a predetermined threshold value in a support cylinder, a pressure signal is produced for the latter, on the basis of which the further supply of the respective support cylinder with pressure fluid is interrupted by the control logic arrangement (12), and
d) after interrupting the supply of that support cylinder with pressure fluid, for which the pressure signal was produced last, the leveling operation is brought to a close in such a way that solely the remaining support cylinders are supplied with the pressure fluid in accordance with the positional signals of the leveling device.

2. Method according to Claim 1, characterised in that ascertaining the pressure prevailing therein in all the support cylinders (1, 2, 3, 4) is carried out simultaneously and/or continuously or sequentially depending on the supply of the support cylinders with the measured quantities of pressure fluid, which preferably takes place cyclically.

3. Method according to Claim 1 or 2, characterised in that after interrupting the supply of pressure fluid to that support cylinder, for which the pressure signal was produced last, an additional, measured quantity of pressure fluid is supplied to this support cylinder (1, 2, 3, 4) before the leveling operation is brought to a close by supplying the remaining support cylinders with pressure fluid in accordance with the positional signals.

4. Method according to one of Claims 1 to 3, characterised in that at the time of full extension of a support cylinder (1, 2, 3, 4), an end position signal for the respective support cylinder, indicating the end of its stroke, is produced and that the leveling operation is interrupted by the control logic arrangement (12) on the basis of the production of an end position signal.

5. Method according to Claim 4, characterised in that on account of the end position signal, an indication signal designating the fully extended support cylinder (1, 2, 3, 4) is produced and that by means of the control logic arrangement (12) on account of the end position signal or of the indication signal, a valve control signal is produced bringing about the discharge of pressure fluid from the respective support cylinder for the retraction thereof.

6. Apparatus for carrying out the method according to one of Claims 1 to 5, in which at least three hydraulic support cylinders (1, 2, 3, 4) are arranged at spatial distances apart on the body to be leveled, by way of which support cylinders the body can be supported on a surface, and in which the support cylinders can be supplied selectively with measured quantities of pressure fluid by way of control valves (V1-V8), which can be actuated by valve control signals made available by a control logic arrangement (12), characterised in that associated with each support cylinder (1 to 4) is a pressure sensor (S₁, S₂, S₃, S₄) for ascertaining the magnitude of the pressure of the pressure fluid located in the support cylinder and for producing a pressure value signal representing the magnitude of this pressure, which can be supplied to the control logic arrangement (12) for signal processing.

7. Apparatus according to Claim 6, characterised in that the control logic arrangement (12) comprises a comparator circuit (15) processing the pressure value signals from the pressure sensors (S₁ to S₄), which in the case of a magnitude of a pressure value signal exceeding a threshold value produces a pressure signal designating the corresponding pressure rise in the respective support cylinder (1 to 4).

## Revendications

1. Procédé pour effectuer une opération de nivellement d'un corps, en particulier, d'une pièce d'un véhicule laquelle est supportée par, au moins, trois cylindres hydrauliques de soutien (1, 2, 3, 4) qui sont reliés, à une certaine distance les uns des autres, au corps devant être nivelé, sur une surface de base, cependant qu'au moyen d'un dispositif de nivellement, sont produits, en fonction des écarts de position dudit corps, des signaux de situation par rapport à sa position de niveau, lesquels signaux de position sont convertis, par des moyens logiques (12), en signaux de commande de valves (V₁, V₂, V₃, V₄, V₅, V₆, V₇, V₈) lesquels sont utilisés pour actionner des valves de commande qui assurent l'alimentation sélective des cylindres de support avec des quantités déterminées d'un fluide hydraulique, caractérisé en ce que :
a) au commencement d'une procédure de nivellement, les signaux de commande de valve sont engendrés, indépendamment des signaux de commande de valves, au moyen de la logique de commande (12) et pour assurer une alimentation simultanée ou séquentielle de tous les cylindres de soutien avec des quantités dosées de liquide hydraulique,
b) qu'on détermina la pression interne régnant dans tous les cylindres de soutien,
c) si l'on constate une élévation de la pression dépassant un seuil prédéterminé dans un cylindre de soutien, un signal de pression est produit pour celui-ci, signal qui interrompt la continuation de fournir du liquide hydraulique au cylindre de soutien en question par la logique de commande (12), et
d) en ce qu'après l'interruption de la fourniture de liquide hydraulique aux cylindres pour lesquels le dernier signal de pression a été produit, on termine la procédure de nivellement en n'alimentant les cylindres de soutien restants en liquide hydraulique qu'en fonction des indications des signaux de situation du dispositif de nivellement.

2. Procédé selon la revendication 1, caractérisé en ce que la pression de commande active tous les cylindres de soutien en même temps et/ou en continu, ou bien de préférence d'une manière séquentielle par des quantités dosées de fluide hydraulique.

3. Procédé selon la revendication 1 ou 2, caractérisé en ce que, après qu'on a interrompu l'alimentation de liquide hydraulique du cylindre de soutien pour lequel le signal de pression a été produit en dernier lieu, on dirige vers ce cylindre de soutien (1, 2, 3, 4) une quantité supplémentaire de liquide sous pression avant que, du fait de la distribution de liquide hydraulique aux cylindres de soutien restants, après réception des signaux de situation, la procédure de nivellement a été terminée.

4. Procédé selon l'une quelconque des revendications 1 à 3, caractérisé en ce, après une extension complète d'un cylindre de soutien (1, 2, 3, 4) un signal indiquant la fin d'une course d'extension est produit pour le cylindre de soutien concerné et en ce que la procédure de nivellement est interrompue par la logique de commande (12) à cause de la production d'un signal de position finale.

5. Procédé selon la revendication 4, caractérisé en ce que, à cause du signal de position finale, on produit un signal indiquant l'extension complète du cylindre de soutien (1, 2, 3, 4) et en ce que, au moyen de la logique de commande (12), on déclenche une évacuation de liquide hydraulique hors du cylindre de soutien concerné aux fins de production d'un signal de commande aux fins de rétraction de ladite valve.

6. Dispositif pour la mise en oeuvre du procédé spécifié dans l'une quelconque des revendications 1 à 5, où sont montés sur le corps à niveler, au moins, trois cylindres de soutien hydrauliques (1, 2, 3, 4) espacés à une certaine distance les uns des autres, par lesquels le corps peut prendre appui sur une surface de base, et où les cylindres de soutien peuvent être alimentés sélectivement avec des quantités déterminées de liquide hydraulique sous pression par des valves de commande (V₁ - V₈) qui peuvent être actionnées par des signaux fournis par une logique de commande (12), caractérisé en ce que chaque cylindre de soutien (1 - 4) comporte un senseur (S₁, S₂, S₃, S₄) pour déterminer l'importance ou l'intensité de la pression du liquide hydraulique contenu dans le cylindre de soutien et pour engendrer un signal d'intensité de pression représentatif de la grandeur ou de l'intensité de ladite pression, lequel peut être appliqué à la logique de commande (12) aux fins de traitement.

7. Dispositif selon la revendication 6, caractérisé en ce que la logique de commande (12) comporte un circuit de comparaison traitant les signaux de valeur ou d'intensité de pression des senseurs (S₁ à S₄) qui, en cas de dépassement d'une certaine valeur de seuil, engendre un signal de pression représentatif de l'élévation de la pression dans le cylindre de soutien concerne (1 à 4).
